# EUROPEAN PATENT APPLICATION

(11) **EP 2 256 360 A1**
(43) Date of publication of application: **01.12.2010**
(21) Application number: 09720576.9
(22) Date of filing: 10.03.2009
(51) Int. Cl.: F16D 65/092

(54) **DISC BRAKE WITH SYSTEM FOR CHECKING THE POSITION IN WHICH BRAKE PADS ARE INSTALLED, AND BRAKE PAD**

(30) Priority: 11.03.2008 ES 200800698
(71) Applicant: TRW Automotive España, S.L., 31012 Pamplona (Navarra) (ES)
(72) Inventor: JANDL, Andreas, E-31007 Pamplona (Navarra) (ES); BARR, Stephen Philip John, D-56237 Nauort (Alemania) (DE)
(74) Representative: Cabinet Plasseraud
(86) International application number: PCT/ES2009/000128
(87) International publication number: WO 2009/112610

(57) **Abstract**

Disc brake with system for checking the position in which brake pads are installed, and brake pad, the brake pads having, in both halves, notches (3) defining a point of correspondence for fitting with respective projections (4) formed in the housings (5) for holding the brake pads, such that the notches (3) in the two halves of each brake pad define spaces of equivalent volume, said notches (3) in the halves of the brake pad being positioned at different distances (S1 and S2) from the central axis (6) of the pad and/or said notches having a configuration which is different, at least, along the top edge.

## Description

### Field of the Art

The present invention relates to brakes referred to as disc brakes and particularly with the installation of the pads of brakes of this type, proposing a system which allows checking the position of said pads so that they are correctly arranged in the installation of application.

### State of the Art

The pads of disc brakes consist of a metal support plate, by means of which the installation on the housing for holding the brake pads in the brake is established, and a friction material fixed on the mentioned metal plate, such that in the installation of application of the pad said friction material must face the brake disc, in order to press against the same in the braking function.

This position in which the brake pads are installed is essential for the brake to fulfill its function, therefore, in order to prevent possible errors in this installation, it is convenient to establish means conditioning the placement of the brake pads in a position corresponding with that of the correct installation, without it being possible to establish the installation in another position.

In this sense, different solutions which determine the position of the brake pads by means of reciprocal conformations for fitting between the pads and the housing for holding the pads with corresponding incorporation have been developed.

Thus, for example, patent EP 1 473 481 contemplates a solution which is based on a projection formed in the central area of the housing for holding the pads and a corresponding notch formed in the central area of the pads, between the conformations of which there is defined a fitting coupling which must be established so that the pads can be placed in the corresponding installation housing.

This same patent also contemplates a solution which is based on a projection formed in an off-center position in the housing for holding the brake pads and a corresponding notch formed in one and the same off-center position in the pads.

Patent DE 10 2005 019 255 contemplates a solution which is based on two projections formed in symmetrical positions with respect to the center in the housing for holding the brake pads and respective notches formed in the same symmetrical positions in the pads.

And patent EP 1 632 692 contemplates a solution which is based on a projection formed in an off-center position in the housing for holding the brake pads and two notches formed in corresponding symmetrical off-center positions in the pads.

There are also solutions based on different bevels formed at the ends of the brake pads, in correspondence with respective inclined planes formed at the ends of the housing for holding the brake pads.

All these solutions have defects which affect the construction of the corresponding brake pads and/or the effectiveness in checking the position in which such pads are installed, or which affect the performance of the pads in the brake of application.

Indeed, the solutions based on a fitting for checking the installation formed in the middle area of the brake pads, or on two fittings which are symmetrical with respect to said central area, require the notch or notches of the brake pads to be formed only in the metal plate of the pads or only in the friction material, without being through notches, so that the pads can only be installed in the correct position, i.e., with the friction material facing the brake disc. In this case, if the notches are formed in the friction material, they will gradually disappear as this braking mass wears away, not fulfilling the function of the fitting for checking the installation.

In the case of an off-center notch in the brake pads, or of different bevels at the ends, the mass of friction material of the pads is decompensated with respect to the central axis, giving rise to vibrations and to the stresses in the braking not being uniform, such that the two pads operating on both sides of the brake disc do not act in parallel, so the wear they experience is irregular since the wear occurs progressively in each pad from one end to the other.

### Object of the Invention

According to the invention a disc brake with a system which allows effectively checking the installation of the brake pads, without affecting the performance of the pads in the braking of application at all, is proposed.

This system object of the invention defines two identical notches formed in positions which are not symmetrical with respect to the central axis of the brake pads and, in the housing for holding the pads, projections corresponding with said notches of the pads.

An arrangement is thus obtained with which each brake pad can only be incorporated in the housing for holding the brake pads in the position corresponding with the friction material facing the brake disc, the accidental installation in the reverse position not being possible since the notches of the pad do not coincide with the projections of the housing for holding the pads in this reverse position due to the asymmetry of the positions of said notches and projections.

With this solution the notches of the brake pad can furthermore be through notches through the friction material and through the metal support plate, without this affecting the check of the positioning of the installation.

And on the other hand, with the mentioned arrangement, the mass of the brake pad is equivalent in the two halves located on both sides of the central axis of the pad, whereby the forces acting on the pad in the braking action are uniformly compensated along the pad, thus preventing vibrations from occurring and the action of the two brake pads acting in an opposite manner is parallel, whereby the wear of the pads is uniform in the entire length thereof.

Therefore, said system object of the invention has truly advantageous features for the function of checking the position in which the brake pads are installed, acquiring its own identity and a preferred character with respect to the currently known systems of said function.

### Description of the Drawings

Figure 1 shows a conventional brake pad without the system for checking the installation position, the position of the center of gravity on the central axis of the pad being observed.
Figure 2 shows a brake pad with a conventional system for checking the installation position by means of an off-center notch, the shift of the center of gravity of this pad to a position which is outside the central axis of the pad being observed.
Figure 3 is a diagram of the action of the forces (F) and moments (M) in the pads of a brake provided with the system for checking the installation position according to what is indicated in the previous figure.
Figure 4 shows a brake pad, in a correlative position with respect to the corresponding housing for holding the pads in the brake, with a system for checking the position in which the pad is installed according to the invention.
Figure 5 is a diagram of the action of the forces (F) and moments (M) in the pads of a brake provided with the system for checking the installation position according to the invention.
Figures 6 and 7 show a brake pad with the system for checking the installation position according to the invention, but now with a variant in the practical embodiment of the pad.

### Detailed Description of the Invention

The object of the invention relates to a system for checking which is intended to define the position in which the brake pads are installed in the disc brakes, in the correct manner, preventing the accidental installation with the pads in a reverse manner, both for new and for partially worn brake pads (for example when carrying out an inspection).

The brake pads of the disc brakes are formed by a metal plate (1) and a mass of friction material (2) fixed on one of the faces of said plate (1), such that the installation on the corresponding housing for holding the pads of incorporation in the brake is established by means of the metal plate (1), the friction material (2) having to face the brake disc in order to perform the braking action by means of the compression on this disc, which braking action is performed by means of two brake pads acting in an opposite manner on both sides of the disc.

For the braking action it is necessary for the brake pads to be arranged with the friction material (2) facing the brake disc, therefore in order to prevent erroneous installations in a reverse position, which would entail the non-action of the brake, it is envisaged that the brake pads are provided with solutions which only allow the installation in the correct position, preventing it in the reverse position.

In this sense, there are solutions based on notches (3) formed in the brake pads and corresponding projections (4) in the housing (5) for holding the pads in the brake, such that between said notches (3) of the brake pads and the projections (4) of the housing (5) for holding the pads, there is defined a fitting the coupling of which must be established so that the corresponding brake pad can be inserted in the housing (5) for holding.

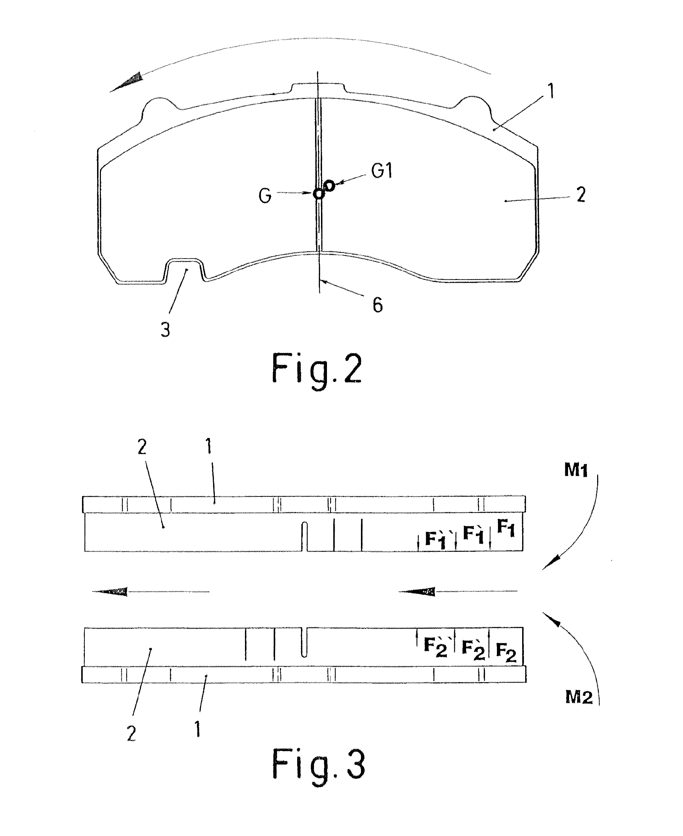

A solution in that sense is the determination of an off-center notch (3) with respect to the central axis (6) in the brake pad, as depicted in Figure 2, for fitting said notch (3) with a projection of the housing (5) for holding the pads positioned in the same position, such that the brake pad can only be installed in the position in which the notch (3) corresponds with the projection of the housing (5) for holding the pads, since in the opposite position, said projection of the housing (5) for holding the pads prevents the brake pad from being fitted in the installation housing (5).

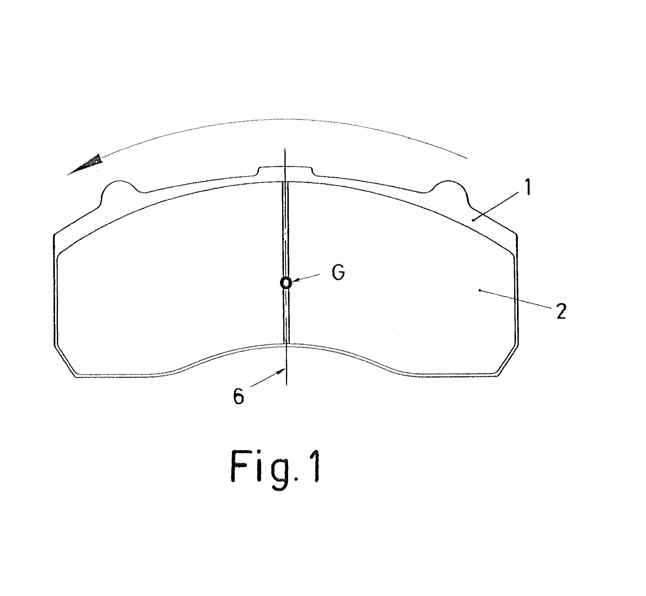

With this solution, the center of gravity (G1) of the brake pad is shifted from the corresponding position (G) on the central axis (6) in a pad which has no notches (3), like that of Figure 1, such that, as depicted in Figure 3, with the application of identical moments (MI and M2) on the pads of a brake provided with this off-center notch (3), in said pads there is a distribution of different specific forces on the surface (F1 and F2), which makes vibrations occur and makes the stresses in the two brake pads not be parallel, causing non-uniform wear of the brake pads, since the wear is progressive from one end towards the other, in an opposite manner in both pads.

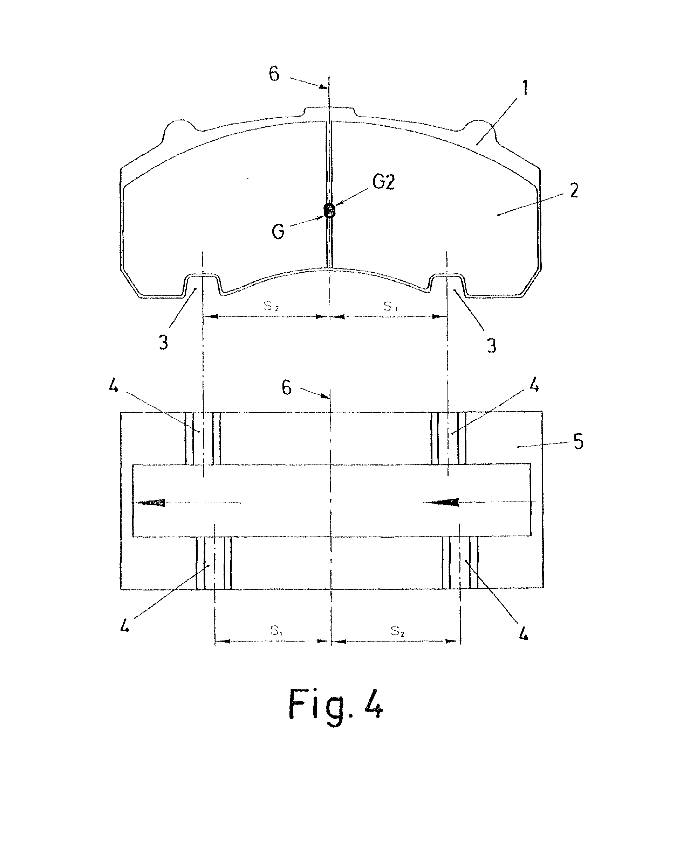

According to the invention, as observed in Figure 4, the brake pads are defined with two identical notches (3), formed on both halves of the pad and in non-symmetrical positions with respect to the central axis (6) thereof, i.e., in positions located at different distances (S1) and (S2) from the central axis (6).

The mass of the two halves of the pad is thus equivalent, whereby the center of gravity (G2) is shifted from the original center of gravity (G), being maintained in the central axis (6) of the pad.

In these conditions, by conjugating said notches (3) of the brake pad with projections (4) in the housings (5) for holding the brake pads, positioned in asymmetric positions corresponding with those of said notches (3) of the pad, the latter can only be installed in the position in which the notches (3) coincide with the projections (4) of the housings (5) for holding the brake pads, because if an attempt is made to install the pad in an opposite position, the notches (3) do not coincide with the projections (4) of the housing (5) for holding the pads, a stop preventing the fitting of the pad in the housing (5) for holding the brake pad therefore being established.

The notches (3) preferably traverse the entire thickness of the brake pad, in correspondence with the extension of the projections (4). As an embodiment variant, it has been provided that the notches (3) may not be through notches in the entire thickness of the brake pad and that they extend in the thickness of the metal support (1) and, furthermore, in at least a length equivalent to the expected wear thickness of the friction material (2).

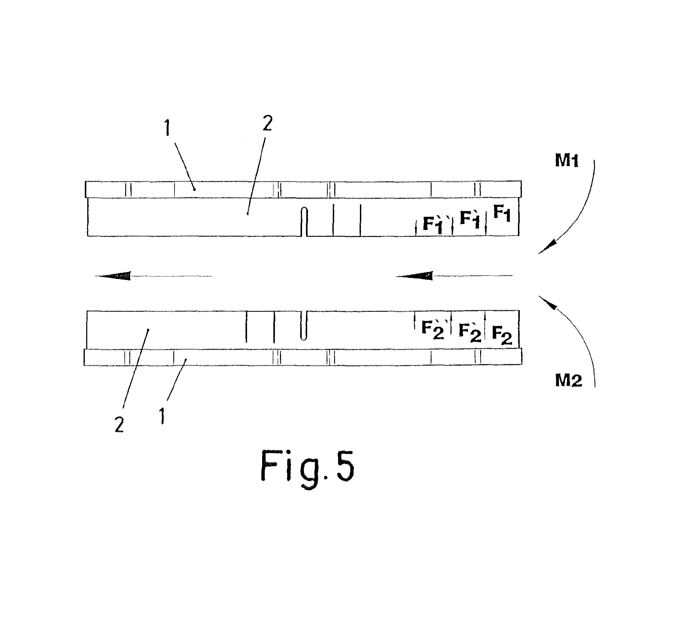

The equivalence of the mass of the halves of the pad, in this case because the reduction of the mass of material is equivalent in both halves since the notches (3) are identical, causes, as is depicted in Figure 5, when identical moments (M1 and M2) are applied on the two pads of a brake, the resulting specific forces on the surface (FI and F2) on the two pads to also be identical, whereby the distribution of stresses in the pads is equivalent towards the ends thereof, such that the pads act in a parallel manner on the brake disc and the wear is uniform in the entire length of the pads.

With this solution of the invention, the notches (3) of the brake pads can furthermore be through notches through the metal plate (1) and through the friction material (2), thus favoring the manufacture of the pads, without this affecting the check of the installation position. This embodiment of the through notches (3) through the entire thickness of the brake pads is preferable, in combination with the extension of the projections (4), in the entire width of the housings (5) for holding the brake pads.

The projections (4) in the housing (5) for holding the brake pads can be formed in their walls/planes with inclinations/bevels without shape correspondence with the notches (3) of the brake pads; but the side walls/planes of the mentioned projections (4) of the housing (5) for holding the brake pads can also have inclinations formed in shape correspondence with the notches (3) of the brake pads, to perform a guidance thereof.

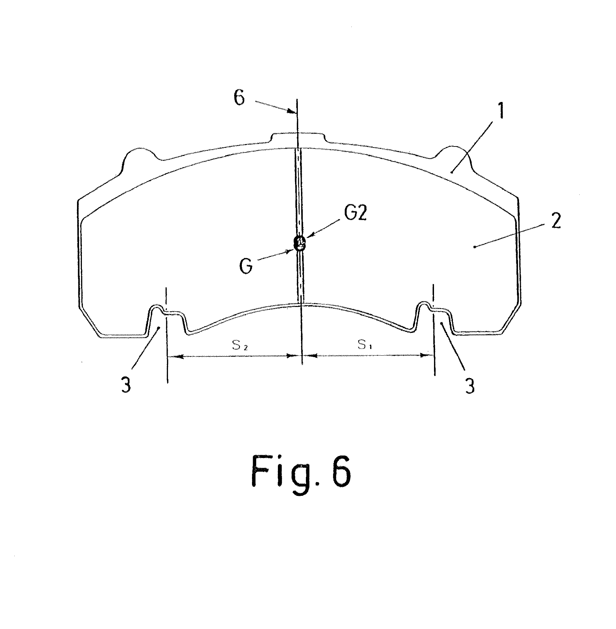

Figure 6 depicts a practical embodiment variant of the pad according to which the top edge of the notches (3) is different, although the notches (3) still demarcate a space the volume of which is identical in both halves of the pad; such that the concept of the mass of the two halves of the pad being equivalent still remains unchanged, whereby the center of gravity (G2) is shifted from the original center of gravity (G) but is still maintained in the central axis (6) of the pad.

With this solution depicted in Figure 6, the distances (S1) and (S2) can even be identical to one another.

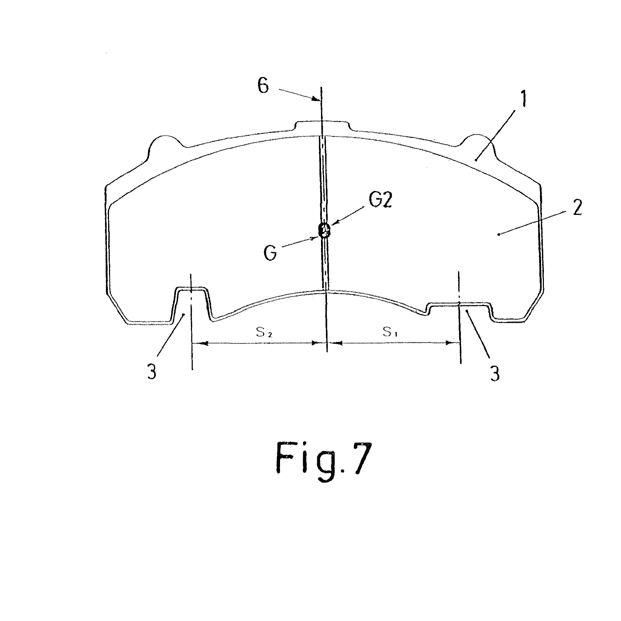

Figure 7 depicts another embodiment variant according to which the configuration of the two notches (3) of both halves is now different along all the edges thereof. Once again, the concept of the volume of the space demarcated by both notches (3) being identical is still maintained; such that in the embodiment depicted both in Figure 4 and in Figures 6 and 7, the mass of both halves of the pad is equivalent, which establishes that the notches (3) concentrate the center of gravity in the central axis (6) of the pad, thus assuring the reduction of vibrations and of non-uniform wear of the friction material (2).

As in the solution depicted in Figure 6, the distances (S1) and (S2) can be different or even identical in relation to one another.

In all cases, the simplest embodiment involves notches (3) being through notches in the entire thickness of both the metal plate (1) and of the friction material (2), but it could occur that the notches (3) traverse the metal plate (1) and only the foreseen thickness of the friction material (2) so that it is not worn in the use of the pad.

## Claims

1. A disc brake with a system for checking the position in which brake pads are installed, which is defined by means of a point of correspondence for fitting between notches (3) formed in both halves of the brake pads and projections (4) existing in the housings (5) for holding the brake pads, **characterized in that** the notches (3) of each pad, preferably traversing the entire thickness of the pad, in correspondence with the projections (4) extending in the entire width of the housings (5), demarcate a space the volume of which is equivalent therebetween, such that the pad has in its two halves an equivalent mass, with the particularity that such notches (3) are located at different distances (S1) and (S2) from the central axis (6) of the pad and/or have, in relation to one another, a configuration which is different, at least, along the top edge thereof.

2. The disc brake with a system for checking the position in which brake pads are installed according to claim 1, **characterized in that** the notches (3) of each brake pad are identical and are positioned at different distances (S1) and (S2) from the central axis (6), defining that the center of gravity (G2) is maintained in said central axis (6) of the pad.

3. The disc brake with a system for checking the position in which brake pads are installed according to claim 1, **characterized in that** the notches (3) of each brake pad have their edges shaped such that at least the top edges of such notches (3) are different in relation to one another; whereas the distances (S1) and (S2) to the central axis (6) can be identical or different in relation to one another.

4. The disc brake with a system for checking the position in which brake pads are installed according to claims 1, 2 and 3, **characterized in that** the notches (3) traverse the thickness of the metal plate (1) and furthermore extend in at least a length equivalent to the wear thickness of the friction material (2) of the brake pad.

5. The disc brake with a system for checking the position in which brake pads are installed according to claims 1, 2 and 3, **characterized in that** the side walls/planes of the projections (4) serve to guide the brake pad.

6. The disc brake with a system for checking the position in which brake pads are installed according to claims 1, 2, 3 and 5, **characterized in that** the side walls/planes of the projections (4) have inclinations formed to guide the brake pad.

7. The disc brake with a system for checking the position in which brake pads are installed according to claims 1, 2, 3 and 5, **characterized in that** the walls/planes of the projections (4) have formed inclinations/bevels which do not guide the brake pad.

8. The disc brake with a system for checking the position in which brake pads are installed according to claims 1 to 7, **characterized in that** the brake pads have notches (3) concentrating the center of gravity (G2) in the central axis (6) of the brake pad, which assures the reduction of vibrations and of non-uniform wear of the friction material.

9. A brake pad for a disc brake with a system for checking the installation position, **characterized in that** along its bottom edge it has notches (3) demarcating spaces of equivalent volume in the notches (3) of both halves of the pad, with said notches (3) being positioned at different distances (S1) and (S2) from the central axis (6) of the pad and/or said notches having a configuration which is different, at least, along the top edge.

10. The brake pad for a disc brake with a system for checking the installation position according to claim 9, **characterized in that** the notches (3) are through notches in the entire thickness of the pad.

11. The brake pad for a disc brake with a system for checking the installation position according to claim 9, **characterized in that** the notches (3) traverse the thickness of the metal plate (1) and furthermore extend in at least a length equivalent to the wear thickness of the friction material (2) of the pad.

12. The brake pad for a disc brake with a system for checking the installation position according to claim 9, **characterized in that** the notches (3) have a configuration such that their top edges are different, whereas the respective distances (S1) and (S2) to the central axis (6) of the pad can be identical or different.

13. The brake pad for a disc brake with a system for checking the installation position according to claim 9, **characterized in that** the notches (3) define a center of gravity (62), which is maintained in the central axis (6) of the pad.
